# FASCICULE DE BREVET EUROPEEN

(11) **EP 3 971 055 B1**
(45) Date de publication et mention de la délivrance du brevet: **05.07.2023**
(21) Numéro de dépôt: 21196686.6
(22) Date de dépôt: 14.09.2021
(51) Int. Cl.: B62D 1/181, B62D 1/184, B62D 1/183

(54) **COLONNE DE DIRECTION A REGLAGE EN PROFONDEUR MOTORISE COMPORTANT UN SYSTEME DE REGLAGE DE LA FRICTION ENTRE DEUX TUBES COULISSANT L UN DANS L AUTRE**
MOTORISIERTE TIEFENVERSTELLBARE LENKSÄULE MIT EINEM SYSTEM ZUR EINSTELLUNG DER REIBUNG ZWISCHEN ZWEI INEINANDER GLEITENDEN ROHREN
STEERING COLUMN WITH MOTORISED DEPTH ADJUSTMENT COMPRISING A SYSTEM FOR ADJUSTING THE FRICTION BETWEEN TWO TUBES SLIDING INTO ONE ANOTHER

(30) Priorité: 16.09.2020 FR 2009381
(43) Date de publication de la demande: 23.03.2022
(73) Titulaire: Robert Bosch Automotive Steering Vendôme, 41100 Vendome (FR)
(72) Inventeur: Canon, Raphael, 45130 Epieds en Beauce (FR); Capela, David, 41160 Busloup (FR)
(74) Mandataire: Bee, Joachim

(56) Documents cités:
- DE-A1-102014 206 267
- US-A- 5 188 392
- ANONYMUS: "COMPUTER CONTROLLED ENERGY ABSORBING STEERING COLUMN FOR AUTOMOTIVE USE", RESEARCH DISCLOSURE, KENNETH MASON PUBLICATIONS, HAMPSHIRE, UK, GB, no. 359, 1 mars 1994 (1994-03-01), pages 157-159, XP000440547, ISSN: 0374-4353

## Description

### DOMAINE TECHNIQUE DE L'INVENTION

L'invention concerne, de façon générale, le domaine technique des colonnes de direction et des systèmes de réglage d'une position axiale relative entre deux tubes coulissant l'un dans l'autre aussi appelé réglage en profondeur.

L'invention se rapporte plus spécifiquement à une colonne de direction à réglage en profondeur motorisé dans laquelle l'effort de friction entre les deux tubes coulissants peut être également réglé de façon motorisée.

L'invention s'applique à la réalisation de colonne de direction présentant un réglage motorisé de la position en profondeur du volant de direction d'un véhicule, tel qu'un véhicule automobile et aux véhicules équipés d'une telle colonne de direction.

Dans la suite de la description, on entend par direction longitudinale et transversale des axes parallèle ou perpendiculaire à l'axe principal de la colonne de direction, aussi appelée axe de direction dans la suite. Il en va de même pour l'avant et l'arrière ou le haut et le bas qui sont respectivement orientés selon la direction normale de déplacement d'un véhicule.

### ETAT DE LA TECHNIQUE ANTERIEURE

Les volants de direction des véhicules automobiles sont très fréquemment réglables en profondeur et en hauteur grâce à un système de réglage actionné par le conducteur du véhicule avant de prendre la route. Le réglage du volant de direction d'un véhicule permet une adaptation du poste de conduite à la morphologie du conducteur. On parle dans ce cas d'un réglage de confort. Un tel système de réglage comprend généralement deux tubes télescopiques. C'est-à-dire, un tube intérieur mobile relié mécaniquement au volant et monté coulissant à l'intérieur d'un tube extérieur fixe axialement et relié mécaniquement au véhicule par une structure de fixation. Un mécanisme de blocage permet de bloquer ou de débloquer le tube intérieur dans le tube extérieur. En condition de conduite, aussi appelé mode opérationnel dans la suite, le tube intérieur est verrouillé par rapport au tube extérieur afin d'interdire tout mouvement axial du volant. En condition de réglage, aussi appelé mode de réglage de confort dans la suite, le tube intérieur est déverrouillé. Ainsi, le tube intérieur peut coulisser dans le tube extérieur sous une pression ou une traction exercée manuellement par le conducteur sur le volant. Ce mouvement dans la colonne de direction permet d'adapter la position du volant aux mensurations du conducteur. En condition de réglage, la position angulaire de l'axe du tube extérieur peut être également modifiée manuellement en faisant basculer le tube extérieur par rapport à un pivot. Ceci permet de régler verticalement la position du volant. Dans les dispositifs de réglage manuel, le conducteur agit sur un levier qui actionne le mécanisme de blocage en resserrant ou en éloignant les bords d'une fente aménagée dans le corps du tube extérieur afin de serrer par pincement le tube extérieur autour du tube intérieur. Ainsi, le mécanisme de blocage est soit en position bloqué, en mode opérationnelle, et le tube extérieur est alors fermement serré sur le tube intérieur pour interdire tout mouvement axial entre les deux tubes en position bloquée, soit en position débloquée, en mode de réglage, et l'écartement de la fente est plus large qu'en position bloquée ce qui génère un jeu entre le tube intérieur et le tube extérieur autorisant un coulissement entre les deux tubes.

Il existe aussi des colonnes de direction dont le réglage est motorisé, généralement par l'utilisation d'un moteur électrique dans le mécanisme de réglage. Typiquement, ce moteur électrique est accouplé à un système vis-écrou qui convertit le mouvement de rotation du moteur électrique en mouvement de translation du tube intérieur dans le tube extérieur. Le système vis-écrou n'étant pas généralement réversible, le mécanisme de réglage cumule alors les fonctions de déplacement axial du tube intérieur et de blocage de la position axiale du tube intérieur par rapport au tube extérieur. Un mécanisme de blocage indépendant est alors superflu.

Afin d'assurer une bonne raideur de la colonne de direction et ainsi d'éviter les déflexions du volant, un certain effort de serrage doit être exercé sur le tube intérieur. Cet effort de serrage est nécessaire pour masquer le jeu de fonctionnement et ainsi garantir une raideur minimum de la liaison. Cet effort de serrage peut être préréglé en usine lors de la fabrication de la colonne de direction par le tarage d'une vis de pression solidaire du tube extérieur et pressant sur le tube intérieur ce qui permet d'ajuster une fois pour toutes l'effort de serrage et donc l'effort de friction entre les deux tubes télescopiques. Le moteur électrique est dimensionné pour atteindre la vitesse de réglage souhaitée compte tenu des efforts de friction engendrés par le serrage entre les deux tubes télescopiques de la colonne de direction et plus généralement dans la chaîne cinématique.

Dans le cas de véhicules équipés d'un système de conduite autonome, la course de coulissement du tube intérieur dans le tube extérieur est augmentée significativement afin de pouvoir escamoter totalement le volant. L'escamotage du volant permet de dégager plus d'espace pour le conducteur du véhicule dans les phases de conduite dite autonomes où le contrôle du véhicule est assuré de manière automatique. Ces courses d'escamotage peuvent être typiquement deux à cinq fois plus importantes que les courses de réglage de confort. Avec un mécanisme de réglage classique, cela signifie que le temps nécessaire pour escamoter le volant est augmenté dans la même proportion. Pour obtenir un temps d'escamotage similaire au temps de réglage de confort usuel, il est nécessaire d'augmenter la vitesse de réglage. Cependant, au vu des contraintes de friction s'exerçant sur le tube intérieur, il est nécessaire d'utiliser des moteurs plus puissants ce qui occasionne une augmentation des coûts, de la taille des moteurs et de leur consommation en énergie électrique.

Il existe donc un besoin de trouver une solution permettant de réduire l'effort de friction entre les deux tubes télescopiques pendant les phases de réglages afin d'augmenter la vitesse de réglage sans impacter le choix du moteur.

### EXPOSE DE L'INVENTION

À cette fin, certaines colonnes de direction comprennent en outre un mécanisme permettant de régler le niveau de friction entre les deux tubes télescopiques, et dans lesquelles le déplacement d'un patin de friction est commandé électriquement entre un mode opérationnel, dans lequel une pression opérationnelle prédéterminée du patin de friction est appliquée contre le tube intérieur, et un mode de réglage, dans lequel une pression de réglage inférieure à la pression opérationnelle est appliquée par le patin de friction sur le tube intérieur. Ainsi, en mode de réglage, 4 l'effort de friction s'opposant à la translation du tube intérieur dans le tube extérieur est réduit.

Comme illustré dans la demande de brevet US 5 188 392, qui divulgue les caractéristiques du préambule de la revendication indépendante 1, ces mécanismes de réglage de la friction reprennent le principe du serrage par vis d'un patin sur le tube intérieur décrit plus avant. Dans ce document, le moteur électrique actionnant le dispositif de réglage de la friction entraîne par un réducteur à vis sans fin un système vis-écrou qui translate un premier patin. Ce premier patin coopère avec une rampe inclinée aménagée dans le corps du tube extérieur afin de transformer la translation parallèle à l'axe du système vis-écrou en un mouvement de translation perpendiculaire à cet axe afin de presser un deuxième patin contre le tube intérieur. Dans cette configuration, la cinématique reliant le moteur électrique au deuxième patin est compliquée et relativement volumineuse du fait du changement de direction du mouvement de translation des deux patins en plus de la transformation du mouvement de rotation du moteur électrique en mouvement de translation d'un patin. De plus, le contrôle du réglage de la friction entre les deux tubes est malaisé à cause du frottement supplémentaire s'exerçant entre le premier patin et la rampe inclinée du corps de tube extérieur. L'accumulation d'au moins deux efforts de friction distincts est difficilement contrôlable au niveau de finesse exigé. Il en résulte également une instabilité potentielle de la raideur de la colonne de direction néfaste à la sécurité de manoeuvre du véhicule en condition de conduite. D'ailleurs, la pression entre la rampe inclinée et le premier patin doit être très importante pour générer une pression de serrage suffisante du deuxième patin sur le tube extérieur. Ainsi, les efforts de frottement dans la cinématique de ce mécanisme de réglage nécessitent un dimensionnement en conséquence du moteur électrique qui doit être suffisamment puissant, et donc plus volumineux et énergivore pour opérer à ce niveau de contrainte de frottement. Les solutions connues aujourd'hui pour régler l'effort de serrage entre les deux tubes télescopiques sont toutes volumineuses et leurs mécanismes complexes.

Par ailleurs, l'utilisation d'un système de réglage motorisé du patin de friction nécessite une parfaite synchronisation avec le réglage motorisé de la position axiale relative entre les deux tubes télescopiques. Une telle synchronisation peut être effectuée par une commande électronique des moteurs électriques actionnant d'une part la vis de réglage axial et, d'autre part, le mécanisme de serrage du patin de friction. Toutefois, dans le cas du dispositif décrit ci-dessus, une telle configuration implique une consommation en énergie électrique importante et une parfaite synchronisation est difficile à réaliser du fait des différences de contraintes mécaniques importantes entre les deux mécanismes à synchroniser. Ceci est particulièrement contraignant alors qu'il est constamment recherché de réduire la consommation globale en énergie d'un véhicule, en particulier lorsqu'il s'agit d'un véhicule autonome qui sera fréquemment un véhicule électrique.

L'invention vise à remédier à tout ou partie des problèmes de l'état de la technique indiqués ci-dessus, en proposant notamment un dispositif de réglage de l'effort de serrage simple, peu volumineux, et facilement intégrable dans une colonne de direction à réglage en profondeur motorisé, et engendrant une faible consommation en énergie.

À cette fin, il est proposé, selon un premier aspect de l'invention, un dispositif de réglage de la friction sur un tube intérieur coulissant dans un tube extérieur d'une colonne de direction à réglage motorisé au moins en profondeur, lesdits tubes intérieur et extérieur étant coulissants entre eux selon un axe de réglage correspondant substantiellement aux axes des tubes intérieur et extérieur. Ledit dispositif de réglage de la friction comprend un actionneur et une vis de serrage entraînée en rotation par ledit actionneur, reliée mécaniquement au tube extérieur, et s'étendant selon un axe de serrage substantiellement orthogonal à l'axe de réglage. Ledit dispositif de réglage de la friction comprend en outre un premier élément de serrage situé d'un côté d'un plan axial P incluant l'axe de réglage, et un deuxième élément de serrage situé de l'autre côté dudit plan axial. Lesdits premier et deuxième éléments de serrage sont reliés mécaniquement au tube extérieur, et exercent une pression sur le tube intérieur. La rotation de ladite vis de serrage génère un mouvement de translation d'au moins un desdits premier et deuxième éléments de serrage selon une direction substantiellement parallèle à l'axe de serrage de manière à ce que la friction varie en fonction de l'écartement entre ledit premier élément de serrage et ledit deuxième élément de serrage. Ledit écartement varie entre une position opérationnelle et au moins une position de réglage dans laquelle la friction est inférieure à celle de la position opérationnelle.

Avantageusement, le premier élément de serrage est constitué d'un premier patin de serrage, et le deuxième élément de serrage est constitué d'un deuxième patin de serrage. Ledit premier et ledit deuxième patin de serrage sont reliés mécaniquement audit tube extérieur de manière coulissante le long de l'axe de serrage.

Cette mise en oeuvre de l'invention permet une transition rapide de la position opérationnelle à la position de réglage indépendamment de la structure du tube extérieur.

Préférentiellement, ladite vis de serrage présente un premier filetage coopérant avec un premier trou taraudé réalisé dans le premier patin de serrage, et un deuxième filetage de pas opposé à celui du premier filetage et coopérant avec un deuxième trou taraudé réalisé dans le deuxième patin de serrage.

L'actionnement des patins de serrage directement par la vis de serrage permet une transformation efficace du couple de serrage en force de pression sur le tube intérieur tout en garantissant une réaction rapide et fiable du dispositif de réglage de la pression lorsqu'il est sollicité par l'actionneur sans risque de blocage des patins de friction.

Alternativement, dans un deuxième mode de réalisation de l'invention, le dispositif de réglage de la friction comprend en outre une fente aménagée au travers d'une enveloppe du tube extérieur et s'étendant longitudinalement parallèlement au plan axial et transversalement de part et d'autre dudit plan axial. Le premier et le deuxième élément de serrage sont constitués respectivement par un premier sabot de serrage et un deuxième sabot de serrage saillant d'une surface intérieure dudit tube extérieur. Lesdits premier et deuxième sabots de serrage sont situés respectivement de part et d'autre de ladite fente.

Cette solution permet de mettre à profit l'élasticité du tube extérieur dans la zone de la fente afin de le pincer sur le tube intérieur en mode opérationnel ce qui diminue le nombre de pièces en mouvement intervenant dans le dispositif de réglage de la friction. Les mouvements des bords de la fente étant inférieurs à quelques dixièmes de millimètre, il n'y a pas de conséquence pour l'intégrité de la structure du tube extérieur.

Préférentiellement, ladite vis de serrage présente une première extrémité filetée 16 coopérant avec un trou taraudé réalisé directement dans l'enveloppe du tube extérieur d'un des côtés de ladite fente, et une deuxième extrémité coopérant avec un premier palier relié mécaniquement à ladite enveloppe du tube extérieur de l'autre côté de ladite fente afin d'arrêter axialement ladite vis de serrage par rapport au tube extérieur.

Dans cette configuration, la vis de serrage étant directement vissée dans l'enveloppe du tube extérieur, le nombre de pièces est diminué et le montage du dispositif en est simplifié. Pour rapprocher les deux bords de la fente, il est suffisant que le premier palier fasse office de butée axiale en direction du plan axial pour la vis de serrage. Néanmoins, le premier palier peut arrêter en translation la vis de serrage dans les deux sens afin d'utiliser le mouvement de l'actionneur pour faciliter le desserrage du tube intérieur.

Alternativement, ladite vis de serrage présente une première extrémité filetée vissée dans un écrou monté dans un logement réalisé dans l'enveloppe du tube extérieur d'un des côtés de ladite fente, et une deuxième extrémité coopérant avec un premier palier relié mécaniquement à ladite enveloppe du tube extérieur de l'autre côté de ladite fente afin d'arrêter axialement ladite vis de serrage par rapport au tube extérieur.

Dans cette solution, l'utilisation d'un écrou standard inséré dans un logement de forme complémentaire ne nécessitant pas de reprise d'usinage du tube extérieur réduit le coût de réalisation de celui-ci.

Dans une autre solution alternative, ladite vis de serrage présente une première extrémité filetée vissée dans un élément taraudé présentant une surface extérieure au moins partiellement cylindrique selon un axe perpendiculaire à l'axe de serrage et coopérant avec un logement au moins partiellement cylindrique réalisé dans l'enveloppe du tube extérieur d'un des côtés de ladite fente, et une deuxième extrémité coopérant avec un premier palier relié mécaniquement à ladite enveloppe du tube extérieur de l'autre côté de ladite fente afin d'arrêter axialement ladite vis de serrage par rapport au tube extérieur.

Dans cette configuration, l'élément taraudé peut osciller dans son logement afin de compenser les déformations de l'enveloppe du tube extérieur dans la zone de la fente et d'éviter ainsi les sollicitations mécaniques sur la vis de serrage induisant des surcharges indésirables de l'actionneur.

Selon un deuxième aspect de l'invention, il est proposé une colonne de direction à réglage motorisé au moins en profondeur comprenant un tube extérieur, un tube intérieur logé de manière coulissante à l'intérieur dudit tube extérieur, un dispositif de réglage de la profondeur d'un volant comprenant un élément moteur permettant de faire coulisser le tube intérieur dans le tube, et un dispositif de réglage de la friction entre ledit tube extérieur et ledit tube intérieur tel que brièvement décrit ci-dessus.

Dans cette configuration, la colonne de direction selon l'invention bénéficie d'une modulation de l'effort de friction entre le tube extérieur et le tube intérieur, afin de réduire l'énergie à fournir pour faire coulisser le tube intérieur en condition de réglage tout garantissant une bonne raideur de la colonne de direction en condition de conduite.

Avantageusement, dans la colonne de direction selon l'invention, la friction exercée sur ledit tube intérieur lorsque le dispositif de réglage de la friction est en position serrée en condition de conduite absorbe au moins partiellement l'énergie en cas de choc.

Cette solution permet d'utiliser le mécanisme de réglage de la friction afin d'exploiter la course de réglage relativement importante de la colonne de direction pour absorber l'énergie en cas de choc.

Préférentiellement, la colonne de direction comprend en outre un dispositif d'absorption d'énergie en cas de choc de type à déformation de matière. L'énergie en cas de choc de faible intensité est absorbée par la force de friction entre ledit tube intérieur et ledit tube extérieur lorsque le dispositif de réglage de la friction est en position serrée en condition de conduite.

Dans cette configuration de la colonne de direction selon l'invention, l'énergie en cas de choc est d'abord absorbée par la friction entre les tubes extérieur et intérieur. Ainsi, le dispositif d'absorption d'énergie à déformation de matière n'intervient que pour les chocs dont l'énergie excède les capacités d'absorption par l'effort de friction ce qui réduit l'occurrence de déformations plastiques d'éléments de la colonne de direction.

Préférentiellement, la colonne de direction comprend en outre une unité de contrôle permettant de synchroniser l'activation ou la désactivation dudit actionneur du dispositif de réglage de la friction avec l'activation ou la désactivation dudit élément moteur du dispositif de réglage de la profondeur.

La synchronisation de l'actionnement du dispositif de réglage de la friction et du dispositif de réglage de la profondeur permet d'économiser l'énergie nécessaire pour réaliser les opérations de réglage tout en garantissant la restauration de la raideur optimale de la colonne dès les opérations de réglage terminées.

Il est proposé selon un troisième aspect de l'invention un véhicule équipé d'une colonne de direction telle que brièvement décrite ci-dessus.

Il est proposé selon un quatrième aspect de l'invention un procédé de réglage de la friction entre un tube extérieur et un tube intérieur d'une colonne de direction telle que décrite ci-dessus. Selon ce procédé, l'actionneur entraîne en rotation la vis de serrage montée sur ladite enveloppe du tube extérieur, la rotation de la vis de serrage modifie l'écartement entre le premier élément de serrage et le deuxième élément de serrage; dans la position opérationnelle, la friction entre le tube extérieur et le tube intérieur est à un niveau supérieur ; et dans une position de réglage de confort, la friction entre le tube extérieur et le tube intérieur est à un niveau inférieur à celui de la position opérationnelle.

Avantageusement, la rotation de la vis de serrage modifie l'écartement entre le premier élément de serrage et le deuxième élément de serrage de manière à ce que dans une position d'escamotage la friction entre le tube extérieur et le tube intérieur soit à un niveau inférieur à celui de la position de réglage de confort.

Préférentiellement, lorsque la profondeur de la colonne de direction est modifiée, tout d'abord le dispositif de réglage de la friction passe de la position opérationnelle à la position de réglage de confort ou la position d'escamotage, ensuite ledit élément moteur dudit dispositif de réglage de la profondeur est activé pour faire coulisser le tube intérieur dans le tube extérieur, et lorsque la colonne de direction a atteint la position souhaitée ledit élément moteur est désactivé et le dispositif de réglage de la friction revient en position opérationnelle.

D'autres caractéristiques et avantages de l'invention sont mis en évidence par la description ci-après d'exemples non limitatifs de réalisation des différents aspects de l'invention.

### BREVE DESCRIPTION DES FIGURES

La description se réfère aux figures annexées qui sont aussi données à titre d'exemples de réalisation non limitatifs de l'invention :
[Fig. 1] la figure 1 illustre une vue en perspective d'une colonne de direction ;
[Fig. 2] la figure 2 illustre une vue de côté d'une colonne de direction ;
[Fig. 3] la figure 3 représente un premier mode réalisation d'une colonne de direction vue selon son axe principal en coupe transversale partielle ;
[Fig. 4] la figure 4 représente une vue de détail de la figure 3 ;
[Fig. 5] la figure 5 représente un deuxième mode de réalisation d'une colonne de direction vue selon son axe principal en coupe transversale ;
[Fig. 6] la figure 6 montre un véhicule automobile.

### DESCRIPTION DETAILLEE DE MODES DE REALISATION

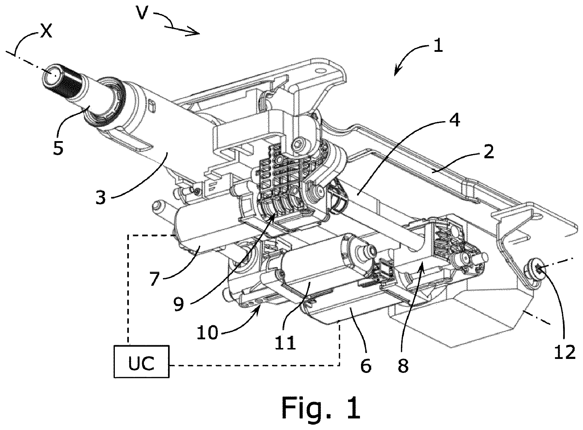

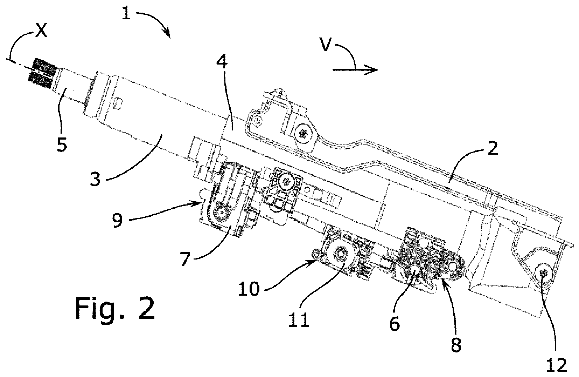

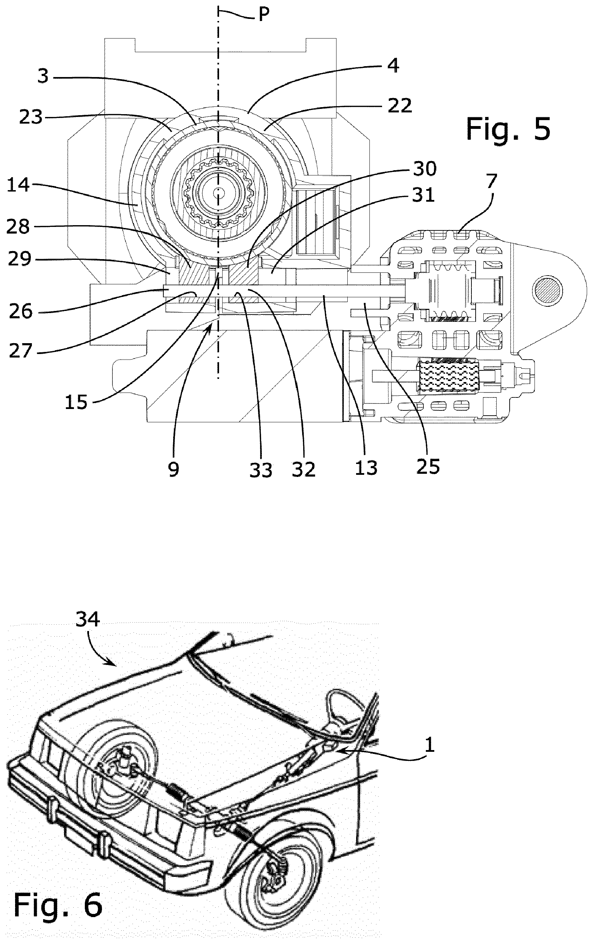

Les figures **1** **et** **2** montrent une colonne de direction **1** pouvant équiper tout type de véhicule automobile, comme celui illustré à la figure **6****.** De nos jours, de tels véhicules sont le plus souvent équipés d'une colonne de direction **1** à réglage de position motorisé, par exemple électriquement, afin de pouvoir adapter la position d'un volant (non illustré) à la morphologie du conducteur. La colonne de direction **1** est reliée mécaniquement au véhicule par une casquette **2** qui vient se fixer sur une partie structurelle d'un véhicule (non illustré). Le volant est relié mécaniquement à la colonne de direction **1** par un embout de volant **5** situé à une extrémité supérieure de la colonne de direction **1.** Cet embout de volant est le prolongement d'un arbre de direction guidé en rotation dans un tube intérieur **3** afin de transmettre les mouvements de rotation impartis par le conducteur au volant autour d'un axe de direction **X.** La colonne de direction **1** est reliée par son extrémité opposée à l'embout de volant **5** à une interface telle qu'un cardan servant de renvoi d'angle pour entraîner un dispositif de transmission du mouvement du volant à une crémaillère de direction (non illustré). Le tube intérieur **3** est logé à l'intérieur d'un tube extérieur **4** de façon à pouvoir coulisser axialement dans le tube extérieur **4.** Les tubes intérieur et extérieur **3** et **4** sont agencés coaxialement à l'axe de direction **X.** Un réglage en profondeur du volant est obtenu notamment par le coulissement du tube intérieur **3** dans le tube extérieur **4** selon un axe de réglage confondu à l'axe de direction **X.**

Un dispositif de réglage en profondeur **8** permet d'entraîner et de guider le mouvement de translation du tube intérieur **3.** Le dispositif de réglage en profondeur **8** est entraîné par un premier moteur électrique **6** ou tout autre type d'actionneur, tel qu'un vérin électrique. Le dispositif de réglage en profondeur **8** comprend un mécanisme de transmission et de transformation du mouvement de rotation du moteur électrique **6** en mouvement de translation du tube intérieur **4.** Le dispositif de réglage en profondeur **8** peut être du type vis/écrou ou du type crémaillère et vis sans fin (non illustré). Ainsi, le conducteur peut actionner le moteur électrique **6** pour régler la position du volant entre une position étirée dans laquelle le tube extérieur **4** est dans sa position la plus reculée par rapport à un sens de déplacement normal du véhicule **V** et une position comprimée dans laquelle le volant est dans une position la plus avancée par rapport au sens normal de déplacement du véhicule **V** en condition de conduite. Ce réglage dit de confort permet d'adapter la position du volant en fonction de la morphologie du conducteur et du contexte de conduite. La course du réglage de confort est typiquement comprise entre 40 et 60 mm. Le dispositif de réglage en profondeur **8** est préférablement irréversible afin que la position axiale de la colonne de direction **1** soit verrouillée lorsque le premier moteur électrique **6** n'est plus actionné.

D'une part, un jeu ou du moins une friction faible sont nécessaires entre le tube intérieur et le tube extérieur afin de permettre en condition de réglage de confort un coulissement sans trop d'effort et donc de consommation électrique pour le moteur électrique **6.** D'autre part, en condition de conduite, le tube intérieur **3** doit être serré dans le tube extérieur **4** afin d'assurer une certaine raideur de la colonne de direction **1** pour limiter les déflexions du volant. Pour masquer le jeu de fonctionnement et garantir une raideur minimum de la liaison entre les tubes intérieur et extérieur **3** et **4** en condition de conduite, la colonne de direction est munie d'un dispositif de réglage de la friction **9** qui permet de moduler l'effort de friction s'exerçant entre les tubes intérieur et extérieur **3** et **4.** Ce dispositif de réglage de la friction **9** est entraîné par un deuxième moteur électrique **7** ou tout autre type d'actionneur, tel qu'un vérin électrique. Le deuxième moteur électrique **7** permet d'augmenter ou de diminuer l'effort de fiction entre les tubes intérieur et extérieur **3** et **4** selon que la colonne de direction **1** est en position opérationnelle ou serrée en condition de conduite, ou en position de réglage ou libérée en condition de réglage de confort.

Le premier et le deuxième moteur électrique **6** et **7** sont alimentés par une unité de contrôle **UC** pour être actionnés.

En condition de conduite, le dispositif de réglage de la friction **9** est en position serrée. Pour passer en position serrée, le deuxième moteur électrique **7** est actionné par l'unité de contrôle **UC** et le couple développé par le deuxième moteur électrique **7** permet d'augmenter la pression exercée sur le tube intérieur **3** à l'intérieur du tube extérieur **4** ce qui augmente l'effort de friction exercé entre les deux tubes. Ainsi, le niveau de l'effort de friction en condition de conduite garantit une certaine raideur de la colonne de direction **1** ce qui limite les déflexions intempestives du volant.

En condition de réglage en profondeur, le dispositif de réglage de la friction **9** est en position libérée. Pour passer de la position serrée à la position libérée, le deuxième moteur électrique est actionné par l'unité de contrôle **UC** pour diminuer la pression exercée sur le tube intérieur **3** à l'intérieur du tube extérieur **4** ce qui diminue l'effort de friction exercé entre les deux tubes. Ainsi, le niveau de l'effort de friction en condition de réglage de confort, et donc la force de résistance axiale qu'il faut vaincre pour faire coulisser le tube intérieur **4** dans le tube extérieur **4,** est plus faible que le niveau de l'effort de friction en condition de conduite. De ce fait, pour régler la position axiale du tube intérieur **3** par rapport au tube extérieur **4,** le premier moteur électrique **6** doit développer une puissance réduite ce qui diminue la consommation énergétique du dispositif de réglage en profondeur **8** et la taille du premier moteur électrique **6.** En outre, le réglage en profondeur peut ainsi s'effectuer avec des performances acoustiques améliorées et une plus grande vitesse sans augmentation de la consommation énergétique et de la puissance du premier moteur électrique **6.**

Le deuxième moteur électrique **7** est actionné pour faire passer le dispositif de réglage de la friction **9** de la position serrée à la position libérée avant que le premier moteur électrique **6** ne soit actionné pour régler en profondeur la position axiale du volant. Une fois le réglage en profondeur accompli, le deuxième moteur électrique **9** est actionné dans le sens opposé pour faire passer le dispositif de réglage de la friction **9** de la position libérée à la position serrée après que le premier moteur électrique **6** a été stoppé.

En complément du réglage en profondeur, la colonne de direction **1** peut aussi être munie d'un dispositif de réglage en hauteur **10.** Typiquement, mais pas exclusivement, pour permettre d'adapter la hauteur du volant à sa morphologie, le conducteur peut actionner un troisième moteur électrique **11** (ou tout autre type d'actionneur, par exemple un vérin électrique) appartenant au dispositif de réglage en hauteur **10.** Lorsque le troisième moteur électrique **11** est actionné, la colonne de direction bascule vers le haut ou vers le bas, autour d'un axe de pivotement de la colonne de direction **12.**

Les véhicules automobiles peuvent présenter un mode de conduite autonome dans lequel le véhicule est dirigé automatiquement sans que le conducteur agisse sur le volant. En mode de conduite autonome, le volant peut ainsi être totalement escamoté afin d'augmenter la place disponible devant le conducteur. Le volant peut aussi être escamoté lorsque le véhicule est parqué. Pour passer en condition escamotée, le dispositif de réglage en profondeur **8** peut être utilisé pour escamoter totalement le volant en dehors de la zone où il se trouve en condition de conduite manuelle. Pour cela, la course d'escamotage du tube intérieur **3** dans le tube extérieur **4** doit être substantiellement supérieure à celle généralement utilisée pour le réglage de confort. Cette différence de longueur de course nécessite une vitesse de translation du tube intérieur **3** dans le tube extérieur **4** plus importante afin de maintenir un temps d'escamotage du volant similaire au temps nécessaire pour effectuer le réglage de confort.

Si l'effort de friction entre les tubes intérieur et extérieur **3** et **4** reste identique, il est nécessaire de prévoir un premier moteur électrique **6** de plus grande puissance, et donc plus volumineux et énergivore, pour que le temps d'escamotage de la colonne direction reste similaire au temps de réglage de confort. Dans ce type de véhicule, il est donc encore plus important de pouvoir faire varier l'effort de friction entre les tubes intérieur et extérieur **3 et 4.** Ceci, d'autant plus que les véhicules équipés d'un système de conduite autonome peuvent être des véhicules électriques dans lesquels la gestion de la consommation énergétique est un point crucial pour ne pas pénaliser leur autonomie. Le dispositif de réglage de la friction **9** actionné par le deuxième moteur électrique **7** pourra donc faire varier l'effort de friction entre les tubes intérieur et extérieur **3** et **4,** entre deux, voire trois niveaux. C'est-à-dire un niveau supérieur en condition de conduite, un niveau intermédiaire en condition de réglage en profondeur, et un niveau inférieur en condition d'escamotage.

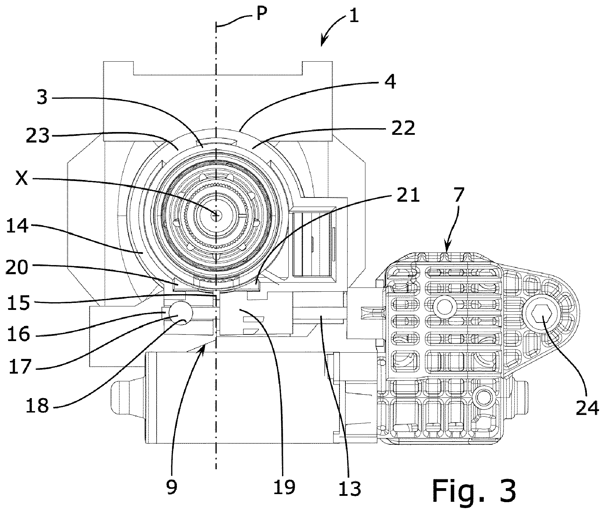

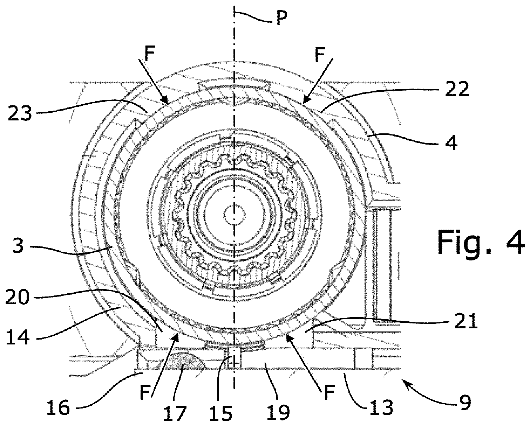

Les figures **3** et **4** montrent un premier exemple de réalisation du dispositif de réglage de la friction **9.** Dans ce dispositif de réglage de la friction **9,** le deuxième moteur électrique **7** est fixé à l'enveloppe du tube extérieur **14** par une première liaison pivot **24,** et accouplé par un mécanisme d'entraînement (non illustré) à une vis de serrage **13** qu'il entraîne en rotation. La vis de serrage **13** s'étend transversalement à la partie basse du tube extérieur **4** selon un axe de serrage orthogonal et non sécant à l'axe de direction **X.**

Une fente **15** est aménagée longitudinalement au travers d'une enveloppe du tube extérieur **14** et perpendiculairement à la vis de serrage **13.** Un plan axial **P** passe par la fente **15** et l'axe de direction **X.** Une première extrémité filetée **16** de la vis de serrage **13** coopère avec un élément taraudé **17** de forme extérieure cylindrique s'étendant perpendiculairement à l'axe de la vis de serrage **16** d'un côté du plan axial **P.** L'élément taraudé **17** est situé dans un logement cylindrique **18** aménagé dans l'enveloppe du tube extérieur d'un côté de la fente **15.** L'élément taraudé **17** forme ainsi une deuxième liaison pivot entre la vis de serrage **13** et l'enveloppe du tube extérieur **14** d'un côté de la fente **15.**

La vis de serrage **13** est arrêtée axialement par un premier palier **19** relié mécaniquement à l'enveloppe du tube extérieur **14** de l'autre côté de la fente **15** par rapport à l'élément taraudé **17.** Le premier palier **19** fait office de butée axiale pour la vis de serrage **13** au moins vers l'élément taraudé **17** ou dans les deux sens.

Un premier et un deuxième élément de serrage sont situés sur la partie intérieure du tube extérieur **4** de part et d'autre de la fente **15.** Les premier et deuxième éléments de serrage correspondent respectivement à un premier et un deuxième sabot de serrage **20** et **21** agencés dans des logements aménagés dans l'enveloppe du tube extérieur **14** de part et d'autre de la fente **15.** Un troisième et un quatrième sabot de serrage **22** et **23** sont situés sur la partie intérieure du tube extérieur **4.** Le troisième et le quatrième sabot de serrage **22** et **23** sont saillants par rapport à la surface intérieure du tube extérieur **4.** Le troisième sabot de serrage **22** est diamétralement opposé au premier sabot de serrage et le quatrième sabot de serrage **23** est diamétralement opposé au deuxième sabot de serrage **21** de manière à ce que le tube intérieur 3 soit en contact avec les quatre sabots de serrage **20** à **23.** Alternativement, au lieu du troisième et du quatrième sabot de serrage **22** et **23,** un seul élément de serrage peut être situé sur la partie intérieure du tube extérieur **4** diamétralement opposée à la fente **15.** Au lieu d'être des éléments rapportés, le premier et le deuxième sabot de serrage **20** et **21** peuvent être réalisés en saillie à partir de la surface intérieure du tube extérieur **4** comme le troisième et le quatrième sabot de serrage **22 et 23.**

Lorsque le deuxième moteur électrique **7** est actionné dans un sens, il entraîne en rotation la vis de serrage **13** qui se visse dans l'élément taraudé **17.** La vis de serrage étant arrêtée axialement par le premier palier **19,** elle rapproche entre eux les deux bords opposés de la fente **15.** La déformation du tube extérieur **4** dans la zone de la fente **15** permet de presser les quatre sabots de serrage **20** à **23** contre le tube intérieur **3,** ce qui induit des forces de pression **F** sur le tube intérieur **3** qui génère des forces de friction entre les deux tubes intérieur et extérieur **3** et **4** qui s'opposent au coulissement du tube intérieur **3** dans le tube extérieur **4.**

Lorsque le deuxième moteur électrique **7** est actionné dans l'autre sens, il entraîne en rotation la vis de serrage **13** qui se dévisse dans l'élément taraudé **17.** Le tube extérieur **4** étant élastique, les deux bords opposés de la fente **15** s'éloignent, ce qui a pour effet de desserrer la pression induite par les quatre sabots de serrage **20** à **23** sur le tube intérieur **3.** Ainsi, les forces de friction entre les deux tubes intérieur et extérieur **3** et **4** sont réduites ou annulées afin de faciliter le coulissement du tube intérieur **3** dans le tube extérieur **4.**

Les déviations axiales de la vis **13** étant relativement faibles durant le vissage et le dévissage de celle-ci, la deuxième liaison pivot formée par l'élément taraudé **17** de forme cylindrique peut être remplacée par un écrou hexagonal ou carré logé dans une cavité de forme complémentaire réalisée dans l'enveloppe du tube extérieur **14** à la place du logement cylindrique **18.** Alternativement, la vis **13** peut être vissée dans un taraudage directement formé dans l'enveloppe du tube extérieur **14** en lieu et place du logement cylindrique **18** ce qui réduit le nombre de pièces du dispositif de réglage de la friction **9** et permet d'en faciliter l'assemblage.

La figure **5** montre un deuxième exemple de réalisation de dispositif de réglage de la friction **9.** Dans ce dispositif de réglage de la friction **9,** la vis de serrage **13** est arrêtée axialement par un deuxième palier **25** relié mécaniquement à l'enveloppe du tube extérieur **14** du côté du deuxième moteur électrique **7.** La vis de serrage **13** présente un premier filetage **26** à son extrémité opposée à celle coopérant avec le deuxième palier **25.** Le premier filetage **26** coopère avec un premier trou taraudé **27** formé dans un premier patin de serrage **28** qui forme ainsi le premier élément de serrage. Le premier patin de serrage **28** est monté dans une première rainure **29** aménagée dans l'enveloppe du tube extérieur **14** d'un côté de la fente **15** de manière à pouvoir coulisser le long de l'axe de serrage transversalement au plan axial **P** par rapport au tube extérieur **4.**

Un deuxième patin de serrage **30** formant le deuxième élément de serrage est monté dans une deuxième rainure **31** aménagée dans l'enveloppe du tube extérieur **14** de l'autre côté de la fente **15** de manière à pouvoir coulisser le long de l'axe de serrage transversalement au plan axial **P** par rapport au tube extérieur **4.** La vis de serrage **13** présente un deuxième filetage **32** coopérant avec un deuxième trou taraudé **33** formé dans le deuxième patin de serrage **30.** Le pas du deuxième filetage **32** est opposé au pas du premier filetage **27,** de manière à ce que, lorsque la vis de serrage **13** tourne, le premier et le deuxième patin de serrage **28** et **30** coulisssent dans des sens opposés de part et d'autre de la fente **15.**

Lorsque le deuxième moteur électrique **7** est actionné dans un sens, il entraîne en rotation la vis de serrage **13** qui, étant arrêtée axialement par le deuxième palier **25,** entraîne les premier et deuxième patins de serrage **28** et **30** qui se rapprochent du plan axial **P.** Le rapprochement entre eux, des patins de serrage **28** et **30,** exerce une pression sur le tube intérieur **3** qui est ainsi serré entre le premier et le deuxième patin de serrage **28** et **30** et les troisième et quatrième sabots de serrage **22** et **23.** Les forces de pression ainsi induites sur le tube intérieur **3** génèrent des forces de friction entre les deux tubes intérieur et extérieur **3** et **4** qui s'opposent au coulissement du tube intérieur **3** dans le tube extérieur **4** en condition de conduite.

Lorsque le deuxième moteur électrique **7** est actionné dans l'autre sens, il entraîne en rotation la vis de serrage **13** qui, étant arrêtée axialement par le deuxième palier **25,** entraîne les premier et deuxième patins de serrage **28** et **30** dans des sens opposés. Ceux-ci s'éloignent ainsi du plan axial **P** ce qui relâche la pression exercée par les premier et deuxième patins de serrage **28** et **30** sur le tube intérieur **3.** Ainsi, les forces de friction s'exerçant entre les deux tubes intérieur et extérieur **3** et **4** sont réduites ou annulées afin de faciliter le coulissement du tube intérieur **3** dans le tube extérieur **4** en condition de réglage de confort ou d'escamotage.

Alternativement, un seul élément de serrage, au lieu de deux, peut être situé sur la partie intérieure du tube extérieur **4** diamétralement opposée aux patins de serrage **28** et **30.** Dans cet exemple de réalisation du dispositif de réglage de la friction **9,** la fente **15** peut être omise puisque le serrage du tube intérieur **3** n'est pas obtenu par déformation du tube extérieur **4.**

Le mécanisme d'entraînement reliant le deuxième moteur électrique **7** à la vis de serrage **13** est irréversible. Il peut être par exemple du type roue et vis sans fin. Ainsi lorsque l'alimentation du deuxième moteur électrique **7** est interrompue, le tube intérieur **3** reste soit serré soit desserré dans le tube extérieur **4** selon que le dispositif de réglage de la friction **9** est en mode de conduite, en mode réglage de confort ou en mode d'escamotage.

Le premier et le deuxième moteur électrique **6** et **7** sont alimentés par une unité de contrôle **UC** qui permet de synchroniser leur actionnement. Lorsque l'instruction est reçue par l'unité de contrôle **UC** de passer de la condition de conduite à la condition de réglage de confort, ou à la condition d'escamotage, tout d'abord le deuxième moteur électrique est actionné pour réduire ou annuler l'effort de friction entre le tube intérieur **3** et le tube extérieur **4.** Après que le couple de serrage en condition de réglage de confort ou en condition d'escamotage a été atteint, le premier moteur électrique **6** est actionné pour faire coulisser le tube intérieur **3** dans le tube extérieur **4.** Lorsque la position souhaitée du volant est atteinte, le premier moteur électrique **6** est désactionné et ensuite le deuxième moteur électrique **7** est actionné pour délivrer le couple de serrage correspondant aux conditions de conduite. Durant le coulissement du tube intérieur **3** dans le tube extérieur **4** et en condition de conduite le deuxième moteur électrique peut-être désactionné car le mécanisme d'entraînement de la vis de serrage **13** est irréversible. Ainsi, le couple de serrage voulu sera maintenu même si le deuxième moteur électrique **7** n'est plus actionné. Comme indiqué ci-après, l'unité de contrôle **UC** peut alimenter les premier et deuxième moteurs électriques **6** et **7** à différents niveaux de puissance selon que la colonne de direction **1** est en condition de réglage de confort ou en condition d'escamotage.

Ainsi, le dispositif de réglage de la friction **9** permet de garantir une raideur suffisante de la colonne de direction **1** en mode de conduite de façon à minimiser les déflexions du volant tout en permettant d'effectuer le positionnement en profondeur du volant en condition de réglage de confort ou d'escamotage avec un niveau de bruit et une consommation énergétique faibles. En outre, bien que la course d'escamotage soit substantiellement plus grande que la course de réglage de confort, le dispositif de réglage de la friction permet de conserver un temps d'escamotage du volant similaire au temps usuel pour le réglage de confort en augmentant la vitesse d'actionnement du premier moteur électrique **6** sans qu'il soit nécessaire d'en prendre un plus puissant. **P**our cela, les premier et deuxième moteurs électriques **6** et **7** peuvent être alimentés par l'unité de contrôle **UC** selon l'un des trois modes de contrôle suivants :
1) Le premier moteur électrique **6** est alimenté de la même manière en condition de réglage de confort et en condition d'escamotage alors que le deuxième moteur électrique est actionné pour fournir un premier couple de serrage du dispositif de réglage de la friction **9** en condition de conduite permettant d'obtenir un serrage important du tube intérieur **3** dans le tube extérieur **4,** un couple de serrage intermédiaire en condition de réglage de confort inférieur au couple de serrage en condition de conduite, et un couple de serrage faible en condition d'escamotage inférieur au couple de serrage intermédiaire. Ainsi la vitesse de coulissement du tube intérieur **3** dans le tube extérieur **4** en condition d'escamotage sera supérieure à la vitesse de coulissement en mode de réglage de confort du fait des différences entre les efforts de friction induits par les différents couples de serrage générés par le deuxième moteur électrique **7.**
2) Le premier moteur électrique **6** est alimenté de la même manière en condition de réglage de confort et en condition d'escamotage alors que le deuxième moteur électrique **7** est actionné pour fournir un premier couple de serrage fort du dispositif de réglage de la friction **9** en condition de conduite permettant d'obtenir un serrage important du tube intérieur **3** dans le tube extérieur **4,** et un couple de serrage faible identique en condition de réglage de confort et en condition d'escamotage. Ainsi la vitesse de coulissement du tube intérieur **3** dans le tube extérieur **4** sera identique en condition d'escamotage et en condition de réglage de confort mais supérieure aux vitesses de réglage en profondeur usuelles.
3) Le deuxième moteur électrique **7** est actionné pour fournir un premier couple de serrage fort du dispositif de réglage de la friction **9** en condition de conduite permettant d'obtenir un serrage important du tube intérieur **3** dans le tube extérieur **4,** et un couple de serrage faible identique en condition de réglage de confort et en condition d'escamotage. Le premier moteur électrique **6** est alimenté pour délivrer un premier niveau de puissance en condition de réglage de confort alors qu'il est alimenté pour obtenir un deuxième niveau de puissance en condition d'escamotage supérieur au premier. Ainsi, la vitesse de coulissement sera en condition d'escamotage supérieure à celle en condition de réglage de confort.

La figure **6** montre un véhicule automobile **34** équipé d'une colonne de direction **1** selon un des modes de réalisation décrits ci-dessus. De telles colonnes de direction intègrent également un dispositif d'absorption de l'énergie en cas de choc afin de protéger le conducteur en cas de collision. Le dispositif de réglage de la friction **9** entre le tube intérieur **3** et le tube extérieur **4** est aussi adapté pour absorber tout ou partie de l'énergie cinétique résiduelle lors d'une collision après action des autres systèmes de sécurité tels que la ceinture de sécurité et l'airbag. En effet, l'effort de friction entre le tube intérieur **3** et le tube extérieur **4** peut être réglé par le dispositif de réglage de la friction **9** en condition de conduite à un niveau suffisant pour que l'énergie de choc résiduelle soit absorbée par la résistance à l'enfoncement induite par l'effort de friction tout le long de la course de coulissement disponible du tube intérieur **3.** Un système d'absorption de l'énergie résiduelle de choc par déformation plastique du type « strap » agit typiquement sur des courses de compression de la colonne de direction, comprises en général entre 80 et 100 millimètres. En comparaison, les courses d'escamotage sont comprises entre 100 et 300 millimètres.

Le deuxième moteur électrique **7** du dispositif de réglage de la friction **9** peut être actionné par l'unité de contrôle **UC** afin de délivrer en condition de conduite un couple de serrage suffisant pour absorber l'énergie résiduelle de choc sur toute la course de réglage disponible. Ce couple de serrage peut être déterminé en temps réel ou à une fréquence déterminée en condition de conduite par l'unité de contrôle en fonction de paramètres préenregistrés et représentatifs des caractéristiques de la colonne de direction **1** et du véhicule, et de paramètres fournis par des capteurs et représentatifs de la morphologie du conducteur, de la position angulaire de la colonne de direction, et de la position en profondeur du volant.. Cette modulation du couple de serrage délivré par le deuxième moteur électrique **7** permet d'obtenir, lorsque la colonne de direction est verrouillée en condition de conduite, un effort de friction le plus proche possible de ce qui est nécessaire pour absorber l'énergie de choc résiduelle en cas de collision. Ainsi, le dispositif de réglage de la friction **9** peut se substituer à un dispositif d'absorption d'énergie de choc conventionnel agissant par déformation plastique ou venir en complément de celui-ci. Le mécanisme d'entraînement relié au premier moteur **6** du dispositif de réglage en profondeur **8** de la position du volant étant irréversible, la position axiale du tube intérieur **3** par rapport au tube intérieur **4** est mécaniquement verrouillée par ce mécanisme d'entraînement. Ainsi, un dispositif de type fusible mécanique (non illustré) peut être incorporé au dispositif de réglage en profondeur **8** afin de libérer le coulissement du tube intérieur dans le tube extérieur en cas de collision.

Comme indiqué dans la description qui précède, les différents aspects de l'invention peuvent-être mis en oeuvre selon le contexte dans des variantes de configuration différentes de celles décrites ci-dessus. Par exemple, la colonne de direction **1** peut équiper tout type de véhicule de transport, tel que les véhicules de transport terrestre, que ce soit pour le transport de fret ou de passagers. De même, tout type d'actionneurs motorisés, tel que des vérins électriques ou des solénoïdes, peuvent être utilisés en lieu et place d'un ou de plusieurs des premier, deuxième et troisième moteurs électriques **6, 7** et **11.**

## Revendications

1. Dispositif de réglage de la friction (9) sur un tube intérieur (3) coulissant dans un tube extérieur (4) d'une colonne de direction (1) à réglage motorisé au moins en profondeur, lesdits tubes intérieur et extérieur (3, 4) étant coulissants entre eux selon un axe de réglage (**X**) correspondant substantiellement aux axes des tubes intérieur et extérieur (3, 4) ; ledit dispositif de réglage de la friction (9) comprenant :
- un actionneur (7) et ;
- une vis de serrage (13) entraînée en rotation par ledit actionneur (7), reliée mécaniquement au tube extérieur (4) et s'étendant selon un axe de serrage substantiellement orthogonal à l'axe de réglage (**X**) ;
ledit dispositif de réglage de la friction (9) **étant caractérisé en ce qu'**il comprend en outre :
- un premier élément de serrage situé d'un côté d'un plan axial (P) incluant l'axe de réglage (**X**) ; et
- un deuxième élément de serrage situé de l'autre côté dudit plan axial (P) ;
lesdits premier et deuxième éléments de serrage étant reliés mécaniquement au tube extérieur (4), et exerçant une pression sur le tube intérieur (3), et la rotation de ladite vis de serrage (13) générant un mouvement de translation d'au moins un desdits premier et deuxième éléments de serrage selon une direction substantiellement parallèle à l'axe de serrage de manière à ce que la friction varie en fonction de l'écartement entre ledit premier élément de serrage et ledit deuxième élément de serrage ; ledit écartement variant entre une position opérationnelle et au moins une position de réglage dans laquelle la friction est inférieure à celle dans la position opérationnelle.

2. Dispositif de réglage de la friction selon la revendication 1, **caractérisé en ce que** le premier élément de serrage comprend un premier patin de serrage (28), et le deuxième élément de serrage comprend un deuxième patin de serrage (30) ; ledit premier et ledit deuxième patin de serrage (28, 30) étant reliés mécaniquement audit tube extérieur (4) de manière coulissante le long de l'axe de serrage.

3. Dispositif de réglage de la friction selon la revendication 2, dans lequel ladite vis de serrage (13) présente :
- un premier filetage (26) coopérant avec un premier trou taraudé (27) réalisé dans le premier patin de serrage (28) ; et
- un deuxième filetage (32) de pas opposé à celui du premier filetage (26) et coopérant avec un deuxième trou taraudé (33) réalisé dans le deuxième patin de serrage (30).

4. Dispositif de réglage de la friction selon la revendication 1, **caractérisé en ce qu'**il comprend en outre :
- une fente (15) aménagée au travers d'une enveloppe du tube extérieur (14) et s'étendant longitudinalement parallèlement au plan axial (P) et transversalement de part et d'autre dudit plan axial (P) ; et dans lequel
- le premier et le deuxième élément de serrage sont constitués respectivement par un premier sabot de serrage (20) et un deuxième sabot de serrage (21) saillant par rapport à une surface intérieure dudit tube extérieur (4) ; lesdits premier et deuxième sabots de serrage (20, 21) étant situés respectivement de part et d'autre de ladite fente (15).

5. Dispositif de réglage de la friction selon la revendication 4, **caractérisé en ce que** ladite vis de serrage (13) présente :
- une première extrémité filetée (16) coopérant avec un trou taraudé réalisé directement dans l'enveloppe du tube extérieur (14) d'un des côtés de ladite fente (15) ; et
- une deuxième extrémité coopérant avec une butée axiale (19) reliée mécaniquement à ladite enveloppe du tube extérieur (14) de l'autre côté de ladite fente (15) afin d'arrêter axialement ladite vis de serrage (13) par rapport au tube extérieur (4).

6. Dispositif de réglage de la friction selon la revendication 4, **caractérisé en ce que** ladite vis de serrage (13) présente :
- une première extrémité filetée vissée (16) dans un écrou monté dans un logement réalisé dans l'enveloppe du tube extérieur (14) d'un des côtés de ladite fente (15) ; et
- une deuxième extrémité coopérant avec une butée axiale (19) reliée mécaniquement à ladite enveloppe du tube extérieur (14) de l'autre côté de ladite fente (15) afin d'arrêter axialement ladite vis de serrage (13) par rapport au tube extérieur (4).

7. Dispositif de réglage de la friction selon la revendication 4, **caractérisé en ce que** ladite vis de serrage (13) présente :
- une première extrémité filetée (16) vissée dans un élément taraudé (17) présentant une surface extérieure au moins partiellement cylindrique selon un axe perpendiculaire à l'axe de serrage et coopérant avec un logement au moins partiellement cylindrique (18) réalisé dans l'enveloppe du tube extérieur (14) d'un des côtés de ladite fente (15) ; et
- une deuxième extrémité coopérant avec une butée axiale (19) reliée mécaniquement à ladite enveloppe du tube extérieur (14) de l'autre côté de ladite fente (15) afin d'arrêter axialement ladite vis de serrage (13) par rapport au tube extérieur (4).

8. Colonne de direction à réglage motorisé au moins en profondeur **caractérisée en ce qu'**elle comprend :
- un tube extérieur (4) ;
- un tube intérieur (3) logé de manière coulissante à l'intérieur dudit tube extérieur (4) ;
- un dispositif de réglage de la profondeur d'un volant (8) comprenant un élément moteur (6) permettant de faire coulisser le tube intérieur(3) dans le tube extérieur (4) ; et
- un dispositif de réglage de la friction (9) entre ledit tube extérieur (4) et ledit tube intérieur (3) selon l'une quelconque des revendications précédentes.

9. Colonne de direction à réglage motorisé au moins en profondeur selon la revendication 8, **caractérisée en ce que** l'énergie en cas de choc est au moins partiellement absorbée par la friction exercée sur ledit tube intérieur (3) lorsque le dispositif de réglage de la friction (9) est en position serrée en condition de conduite.

10. Colonne de direction à réglage motorisé au moins en profondeur selon la revendication 8, **caractérisée en ce qu'**elle comprend en outre :
- un dispositif d'absorption d'énergie en cas de choc de type à déformation de matière ; et
dans laquelle l'énergie en cas de choc de faible intensité est absorbée par la force de friction entre ledit tube intérieur (3) et ledit tube extérieur (4) lorsque le dispositif de réglage de la friction (9) est en position serrée en condition de conduite.

11. Colonne de direction à réglage motorisé au moins en profondeur selon l'une quelconque des revendications 8 à 10, comprenant en outre une unité de contrôle (**UC**) permettant de synchroniser l'activation ou la désactivation dudit actionneur (7) du dispositif de réglage de la friction (9) avec l'activation ou la désactivation dudit élément moteur (6) du dispositif de réglage de la profondeur (8).

12. **V**éhicule équipé d'une colonne de direction (1) à réglage motorisé au moins en profondeur selon l'une quelconque des revendications 8 à 11.

13. Procédé de réglage de la friction entre un tube extérieur et un tube intérieur d'une colonne de direction (1) à réglage au moins en profondeur selon l'une quelconque des revendications 8 à 10, dans lequel :
- l'actionneur (7) entraîne en rotation la vis de serrage (13) ;
- la rotation de la vis de serrage (13) modifie l'écartement entre le premier élément de serrage et le deuxième élément de serrage;
- dans la position opérationnelle, la friction entre le tube extérieur (4) et le tube intérieur (3) est à un niveau supérieur ; et
- dans une position de réglage, la friction entre le tube extérieur (4) et le tube intérieur (3) est à un niveau inférieur à celui de la position opérationnelle.

14. Procédé de réglage de la friction selon la revendication 12, dans lequel :
- la rotation de la vis de serrage (13) modifie l'écartement entre le premier élément de serrage et le deuxième élément de serrage de manière à ce que dans une position d'escamotage la friction entre le tube extérieur (4) et le tube intérieur (3) soit à un niveau inférieur à celui de la position de réglage de confort.

15. Procédé de réglage de la friction selon la revendication 14, dans lequel, lorsque la profondeur de la colonne de direction 1 est modifiée :
- tout d'abord, le dispositif de réglage de la friction (9) passe de la position opérationnelle à la position de réglage de confort ou à la position d'escamotage ;
- ensuite, ledit élément moteur (6) dudit dispositif de réglage de la profondeur (8) est activé pour faire coulisser le tube intérieur (3) dans le tube extérieur (4) ; et
- lorsque la colonne de direction (1) a atteint la position souhaitée, ledit élément moteur (6) est désactivé et ledit actionneur (7) est actionné pour que le dispositif de réglage de la friction (9) revienne en position opérationnelle.

## Patentansprüche

1. Vorrichtung (9) zur Einstellung der Reibung an einem Innenrohr (3), das in einem Außenrohr (4) einer zumindest in der Tiefe motorisch einstellbaren Lenksäule (1) gleitet, wobei das Innen- und das Außenrohr (3, 4) entlang einer Einstellachse (X), die im Wesentlichen den Achsen des Innen und des Außenrohrs (3, 4) entspricht, untereinander gleiten; wobei die Reibungseinstellvorrichtung (9) Folgendes umfasst:
- einen Aktuator (7) und
- eine Klemmschraube (13), die durch den Aktuator (7) in Drehung versetzt wird, mechanisch mit dem Außenrohr (4) verbunden ist und sich entlang einer Klemmachse erstreckt, die im Wesentlichen senkrecht zur Einstellachse (X) verläuft;
wobei die Reibungseinstellvorrichtung (9) **dadurch gekennzeichnet ist, dass** sie ferner Folgendes umfasst:
- ein erstes Klemmelement, das sich auf einer Seite einer axialen Ebene (P) befindet, die die Einstellachse (X) einschließt; und
- ein zweites Klemmelement, das sich auf der anderen Seite der axialen Ebene (P) befindet;
wobei das erste und zweite Klemmelement mechanisch mit dem Außenrohr (4) verbunden sind und einen Druck auf das Innenrohr (3) ausüben, und wobei die Drehung der Klemmschraube (13) eine Translationsbewegung mindestens eines des ersten und des zweiten Klemmelements entlang einer zur Klemmachse im Wesentlichen parallelen Richtung bewirkt, so dass die Reibung in Abhängigkeit vom Abstand zwischen dem ersten Klemmelement und dem zweiten Klemmelement variiert; wobei der Abstand zwischen einer Betriebsposition und mindestens einer Einstellposition, in der die Reibung kleiner als in der Betriebsposition ist, variiert.

2. Reibungseinstellvorrichtung nach Anspruch 1, **dadurch gekennzeichnet, dass** das erste Klemmelement einen ersten Klemmschuh (28) umfasst und das zweite Klemmelement einen zweiten Klemmschuh (30) umfasst; wobei der erste und der zweite Klemmschuh (28, 30) entlang der Klemmachse gleitend mechanisch mit dem Außenrohr (4) verbunden sind.

3. Reibungseinstellvorrichtung nach Anspruch 2, wobei die Klemmschraube (13) Folgendes aufweist:
- ein erstes Gewinde (26), das mit einem im ersten Klemmschuh (28) ausgebildeten ersten Gewindeloch (27) zusammenwirkt; und
- ein zweites Gewinde (32) mit einer Steigung, die der des ersten Gewindes (26) entgegengesetzt ist, das mit einem im zweiten Klemmschuh (30) ausgebildeten zweiten Gewindeloch (33) zusammenwirkt.

4. Reibungseinstellvorrichtung nach Anspruch 1, **dadurch gekennzeichnet, dass** sie ferner Folgendes umfasst:
- einen Schlitz (15), der durch einen Mantel des Außenrohrs (14) hindurch angeordnet ist und sich in Längsrichtung parallel zur axialen Ebene (P) und in Querrichtung auf beiden Seiten der axialen Ebene (P) erstreckt; und wobei
- das erste und das zweite Klemmelement durch einen ersten Klemmschuh (20) bzw. einen zweiten Klemmschuh (21) gebildet sind, die in Bezug auf eine Innenfläche des Außenrohrs (4) vorstehen; wobei sich der erste und der zweite Klemmschuh (20, 21) auf der einen bzw. der anderen Seite des Schlitzes (15) befinden.

5. Reibungseinstellvorrichtung nach Anspruch 4, **dadurch gekennzeichnet, dass** die Klemmschraube (13) Folgendes aufweist:
- ein erstes Gewindeende (16), das mit einem Gewindeloch zusammenwirkt, das direkt im Mantel des Außenrohrs (14) auf einer der Seiten des Schlitzes (15) ausgebildet ist; und
- ein zweites Ende, das mit einem axialen Anschlag (19) zusammenwirkt, der mechanisch mit dem Mantel des Außenrohrs (14) auf der anderen Seite des Schlitzes (15) verbunden ist, um die Klemmschraube (13) in Bezug auf das Außenrohr (4) axial zu arretieren.

6. Reibungseinstellungsvorrichtung nach Anspruch 4, **dadurch gekennzeichnet, dass** die Klemmschraube (13) Folgendes aufweist:
- ein erstes Gewindeende (16), das in eine Mutter eingeschraubt ist, die in einer Aufnahme montiert ist, die im Mantel des Außenrohrs (14) auf einer der Seiten des Schlitzes (15) ausgebildet ist; und
- ein zweites Ende, das mit einem axialen Anschlag (19) zusammenwirkt, der mechanisch mit dem Mantel des Außenrohrs (14) auf der anderen Seite des Schlitzes (15) verbunden ist, um die Klemmschraube (13) in Bezug auf das Außenrohr (4) axial zu arretieren.

7. Reibungseinstellvorrichtung nach Anspruch 4, **dadurch gekennzeichnet, dass** die Klemmschraube (13) Folgendes aufweist:
- ein erstes Gewindeende (16), das in ein Gewindeelement (17) eingeschraubt ist, das eine zumindest teilweise zylindrische Außenfläche entlang einer zur Klemmachse senkrechten Achse aufweist und mit einer zumindest teilweise zylindrischen Aufnahme (18) zusammenwirkt, die im Mantel des Außenrohrs (14) auf einer der Seiten des Schlitzes (15) ausgebildet ist; und
- ein zweites Ende, das mit einem axialen Anschlag (19) zusammenwirkt, der mechanisch mit dem Mantel des Außenrohrs (14) auf der anderen Seite des Schlitzes (15) verbunden ist, um die Klemmschraube (13) in Bezug auf das Außenrohr (4) axial zu arretieren.

8. Zumindest in der Tiefe motorisch einstellbare Lenksäule, **dadurch gekennzeichnet, dass** sie Folgendes umfasst:
- ein Außenrohr (4);
- ein Innenrohr (3), das gleitend im Inneren des Außenrohrs (4) angeordnet ist;
- eine Vorrichtung zur Einstellung der Tiefe eines Lenkrads (8) mit einem Antriebselement (6), das das Gleiten des Innenrohrs (3) im Außenrohr (4) ermöglicht; und
- eine Vorrichtung (9) zur Einstellung der Reibung zwischen dem Außenrohr (4) und dem Innenrohr (3) nach einem der vorangehenden Ansprüche.

9. Zumindest in der Tiefe motorisch einstellbare Lenksäule nach Anspruch 8, **dadurch gekennzeichnet, dass** die Energie im Falle eines Aufpralls zumindest teilweise durch die Reibung absorbiert wird, die auf das Innenrohr (3) wirkt, wenn sich die Reibungseinstellvorrichtung (9) im Fahrzustand der Klemmposition befindet.

10. Zumindest in der Tiefe motorisch einstellbare Lenksäule nach Anspruch 8, **dadurch gekennzeichnet, dass** sie ferner Folgendes umfasst:
- eine Vorrichtung zur Absorption von Energie im Falle eines Aufpralls vom Materialverformungstyp; und
wobei die Energie im Falle eines Aufpralls mit geringer Intensität durch die Reibungskraft zwischen dem Innenrohr (3) und dem Außenrohr (4) absorbiert wird, wenn sich die Reibungseinstellvorrichtung (9) im Fahrzustand in der Klemmposition befindet.

11. Zumindest in der Tiefe motorisch einstellbare Lenksäule nach einem der Ansprüche 8 bis 10, ferner umfassend eine Steuereinheit (UC), die es ermöglicht, die Aktivierung oder Deaktivierung des Aktuators (7) der Reibungseinstellvorrichtung (9) mit der Aktivierung oder der Deaktivierung des Antriebselements (6) der Tiefeneinstellvorrichtung (8) zu synchronisieren.

12. Fahrzeug, das mit einer zumindest in der Tiefe motorisch einstellbaren Lenksäule (1) nach einem der Ansprüche 8 bis 11 ausgestattet ist.

13. Verfahren zur Einstellung der Reibung zwischen einem Außenrohr und einem Innenrohr einer zumindest in der Tiefe einstellbaren Lenksäule (1) nach einem der Ansprüche 8 bis 10, wobei:
- der Aktuator (7) die Klemmschraube (13) in Drehung versetzt;
- die Drehung der Klemmschraube (13) den Abstand zwischen dem ersten Klemmelement und dem zweiten Klemmelement verändert;
- in der Betriebsposition die Reibung zwischen dem Außenrohr (4) und dem Innenrohr (3) auf einem höheren Niveau ist und
- in einer Einstellposition die Reibung zwischen dem Außenrohr (4) und dem Innenrohr (3) auf einem niedrigeren Niveau als dem der Betriebsposition ist.

14. Verfahren zur Einstellung der Reibung nach Anspruch 12, wobei:
- die Drehung der Klemmschraube (13) den Abstand zwischen dem ersten Klemmelement und dem zweiten Klemmelement so verändert, dass in einer eingefahrenen Position die Reibung zwischen dem Außenrohr (4) und dem Innenrohr (3) auf einem niedrigeren Niveau als dem der Komfort-Einstellposition ist.

15. Verfahren zur Einstellung der Reibung nach Anspruch 14, wobei beim Ändern der Tiefe der Lenksäule 1:
- zunächst die Reibungseinstellvorrichtung (9) aus der Betriebsposition in die Komfort-Einstellposition oder in die Einfahrposition wechselt;
- anschließend das Antriebselement (6) der Tiefeneinstellvorrichtung (8) aktiviert wird, um das Gleiten des Innenrohrs (3) im Außenrohr (4) zu veranlassen; und
- wenn die Lenksäule (1) die gewünschte Position erreicht hat, das Antriebselement (6) deaktiviert und der Aktuator (7) betätigt wird, damit die Reibungseinstellvorrichtung (9) in die Betriebsposition zurückkehrt.

## Claims

1. Friction adjusting device (9) for adjusting friction on an inner tube (3) sliding in an outer tube (4) of a steering column (1) with motorized adjustment at least of the depth, the said inner and outer tubes (3, 4) sliding on one another along an adjustment axis (X) corresponding substantially to the axes of the inner and outer tubes (3, 4); the said friction adjusting device (9) comprising:
- an actuator (7); and
- a clamping screw (13) which is driven in rotation by the said actuator (7), is mechanically connected to the outer tube (4) and extends along a clamping axis substantially orthogonal to the adjustment axis (X);
the said friction adjusting device (9) **being characterized in that** it moreover comprises:
- a first clamping element located on one side of an axial plane (P) including the adjustment axis (X); and
- a second clamping element located on the other side of the said axial plane (P);
the said first and second clamping elements being mechanically connected to the outer tube (4) and exerting a pressure on the inner tube (3), and the rotation of the said clamping screw (13) generating a movement of at least one of the said first and second clamping elements in translation along a direction substantially parallel to the clamping axis, in such a way that the friction varies as a function of the distance between the said first clamping element and the said second clamping element; the said distance varying between an operational position and at least one adjusting position in which the friction is less than that in the operational position.

2. Friction adjusting device according to Claim 1, **characterized in that** the first clamping element comprises a first clamping shoe (28), and the second clamping element comprises a second clamping shoe (30); the said first and the said second clamping shoe (28, 30) being mechanically connected to the said outer tube (4) so as to be able to slide along the clamping axis.

3. Friction adjusting device according to Claim 2, wherein the said clamping screw (13) has:
- a first thread (26), which interacts with a first tapped hole (27) made in the first clamping shoe (28); and
- a second thread (32), which has an opposite pitch to that of the first thread (26) and interacts with a second tapped hole (33) made in the second clamping shoe (30).

4. Friction adjusting device according to Claim 1, **characterized in that** it moreover comprises:
- a slot (15), which is made through a sleeve of the outer tube (14) and extends longitudinally parallel to the axial plane (P) and transversely on either side of the said axial plane (P); and wherein
- the first and the second clamping element are made up of a first clamping pad (20) and a second clamping pad (21), respectively, protruding beyond an inner surface of the said outer tube (4); the said first and second clamping pads (20, 21) being located respectively on either side of the said slot (15).

5. Friction adjusting device according to Claim 4, **characterized in that** the said clamping screw (13) has:
- a first threaded end (16), which interacts with a tapped hole made directly in the sleeve of the outer tube (14) on one side of the said slot (15); and
- a second end, which interacts with an axial stop (19) mechanically connected to the said sleeve of the outer tube (14) on the other side of the said slot (15) in order to axially stop the said clamping screw (13) in relation to the outer tube (4) .

6. Friction adjusting device according to Claim 4, **characterized in that** the said clamping screw (13) has:
- a first threaded end (16), which is screwed in a nut mounted in a recess that is made in the sleeve of the outer tube (14) on one side of the said slot (15); and
- a second end, which interacts with an axial stop (19) mechanically connected to the said sleeve of the outer tube (14) on the other side of the said slot (15) in order to axially stop the said clamping screw (13) in relation to the outer tube (4) .

7. Friction adjusting device according to Claim 4, **characterized in that** the said clamping screw (13) has:
- a first threaded end (16), which is screwed in a tapped element (17) that has an outer surface at least partially cylindrical along an axis perpendicular to the said clamping axis and interacts with an at least partially cylindrical recess (18) that is made in the sleeve of the outer tube (14) on one side of the said slot (15); and
- a second end, which interacts with an axial stop (19) mechanically connected to the said sleeve of the outer tube (14) on the other side of the said slot (15) in order to axially stop the said clamping screw (13) in relation to the outer tube (4) .

8. Steering column with motorized adjustment at least of the depth, **characterized in** it comprises:
- an outer tube (4);
- an inner tube (3) received slidingly on the inside of the said outer tube (4);
- a steering-wheel depth adjusting device (8) comprising a motor element (6) for making the inner tube (3) slide in the outer tube (4); and
- a friction adjusting device (9) between the said outer tube (4) and the said inner tube (3) according to any one of the preceding claims.

9. Steering column with motorized adjustment at least of the depth according to Claim 8, **characterized in that** the energy in the event of an impact is at least partially absorbed by the friction exerted on the said inner tube (3) when the friction adjusting device (9) is in the clamped position while in a driving state.

10. Steering column with motorized adjustment at least of the depth according to Claim 8, **characterized in that** it moreover comprises:
- a device for absorbing energy in the event of an impact of the material deformation type; and
wherein the energy in the event of a low-intensity impact is absorbed by the frictional force between the said inner tube (3) and the said outer tube (4) when the friction adjusting device (9) is in the clamped position while in a driving state.

11. Steering column with motorized adjustment at least of the depth according to any one of Claims 8 to 10, moreover comprising a control unit (UC) for synchronizing the activation or deactivation of the said actuator (7) of the friction adjusting device (9) with the activation or the deactivation of the said motor element (6) of the depth adjusting device (8).

12. Vehicle fitted with a steering column (1) with motorized adjustment at least of the depth according to any one of Claims 8 to 11.

13. Method for adjusting friction between an outer tube and an inner tube of a steering column (1) with adjustment at least of the depth according to any one of Claims 8 to 10, wherein:
- the actuator (7) drives the clamping screw (13) in rotation;
- the rotation of the clamping screw (13) modifies the distance between the first clamping element and the second clamping element;
- in the operational position, the friction between the outer tube (4) and the inner tube (3) is greater; and
- in an adjusting position, the friction between the outer tube (4) and the inner tube (3) is less than that in the operational position.

14. Friction adjusting method according to Claim 12, wherein:
- the rotation of the clamping screw (13) modifies the distance between the first clamping element and the second clamping element in such a way that, in a retracted position, the friction between the outer tube (4) and the inner tube (3) is less than that in the comfort adjusting position.

15. Friction adjusting method according to Claim 14, wherein, when the depth of the steering column 1 is modified:
- first of all, the friction adjusting device (9) changes from the operational position to the comfort adjusting position or to the retracted position;
- then, the said motor element (6) of the said depth adjusting device (8) is activated to make the inner tube (3) slide in the outer tube (4); and,
- when the steering column (1) has reached the desired position, the said motor element (6) is deactivated and the said actuator (7) is actuated such that the friction adjusting device (9) returns to the operational position.
